# EUROPEAN PATENT APPLICATION

(11) **EP 3 029 622 A1**
(43) Date of publication of application: **08.06.2016**
(21) Application number: 14195656.5
(22) Date of filing: 01.12.2014
(51) Int. Cl.: G06Q 30/06

(54) **Computer system and method for providing a trading platform with improved user account management**

(71) Applicant: DEUTSCHE BÖRSE AG, 65760 Eschborn (DE)
(72) Inventor: Polansky, Raphael, 65760 Eschborn (DE); Höptner, Alexander, 65760 Eschborn (DE); Pollmann, Sigurd, 65760 Eschborn (DE)
(74) Representative: Grünecker Patent- und Rechtsanwälte PartG mbB

(57) **Abstract**

A computer system and a related method are provided to let game systems interact with a trading platform to trade an item such as a virtual good. A game system initiates an inter-system account transfer of a tradable item from a user account of the game system to a first user account of the trading platform. There are further an intra-system account transfer from the first to a second user account, and an inter-system account transfer from the second user account to the user account of the game system. In response to user data relating to the user account of the game system, an access token is returned that is assigned to the first or second user account that corresponds to the user account of the game system. A request is sent to access services to perform the account transfers. The request comprises the access token assigned to the user account.

## Description

### BACKGROUND OF THE INVENTION

### 1. Field of the Invention

The invention relates to a computer system for providing a trading platform to users of one or more game systems, and to a corresponding method of operating a game system to interact with the trading platform.

### 2. Description of the Related Art

Games industry is an important and growing sector in economics. Electronic, computer and video games have become available on a number of different platforms such as game consoles, personal computers, hand held devices such as mobile phones, and online platforms. Myriads of games exist in almost any conceivable genre, targeting any part of the society irrespective of age, gender or cultural background.

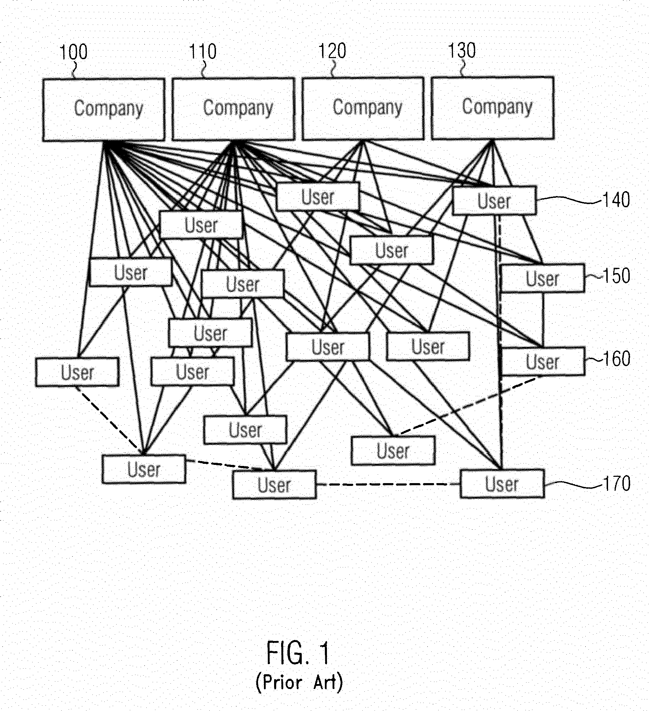

In fact, there is a high number of companies developing, producing and implementing games and game systems of various types. A huge number of users who play the games or use the game systems are usually not restricted to just one of such games, game systems or companies. To the contrary, as shown in FIG. 1, the vast majority of the users play games of different companies. That is, not only does each company have many users as their customers, but also the users do usually have customer relationships to many companies.

Most games allow users to individually design, customize or influence their game environment. This includes modifying or adding in-game equipment such as vehicles, weapons or the like, and virtual gifts such as flowers, rings or the like. Many games do also provide for in-game currency such as virtual gold, coins or credits.

Such virtual goods and currencies are usually developed by the companies and programmed into each game separately. In particular with freemium or free-to-play games, virtual items are an important revenue source since virtual items or advanced game features must be paid for, to advance further in the game or to enhance game experience. For this reason, virtual items or game features do have a monetary value even though they are virtual.

To monetize and leverage the virtually created value, it is possible in some games for one user to transfer virtual items to another user in order to obtain a real monetary compensation. This is depicted in FIG. 1 by means of dashed lines, and it can be considered to be a black market trading since it is not regulated or certified, nor even recognized by the companies. Often, such black market trading is insecure to the users. However, to avoid such black market trading, companies would have to develop respective functionality and program it into each individual game separately, which would significantly increase the development costs, and which would nevertheless restrict such user-to-user transfers to those within a particular game.

### SUMMARY OF THE INVENTION

An improved technique is provided which allows for user-to-user transfers of virtual items without significantly complicating the game development and without leading to insecure transactions between users, and which is nevertheless user friendly and easy to use.

In an embodiment, a computer system for providing a trading platform to users of one or more game systems is provided. The computer system is arranged for being coupled to a first game system and a second game system which each have a user account. The first game system is the same as or different from the second game system. The first game system's user account is different from the second game system's user account. The computer system comprises an account system that holds a first user account and a second user account of the trading platform. The computer system further comprises an identity management system which is configured to receive from the first game system user data relating to the first game system's user account, and from the second game system user data relating to the second game system's user account. The identity management system is further configured to identify the trading platform's first user account as relating to the user data received from the first game system, and the trading platform's second user account as relating to the user data received from the second game system. Moreover, the identity management system is configured to send a response to the respective game system including an access token assigned to the respective trading platform's user account. The computer system further comprises a trading system which is configured to perform, in response to a request from the first game system, an inter-system account transfer of a tradable item from the first game system's user account to the trading platform's first user account, and in response to a request from the second game system, an intra-system account transfer of the item from the trading platform's first user account to the trading platform's second user account and an inter-system account transfer of the item from the trading platform's second user account to the second game system's user account. The requests comprise the respective access token assigned to the respective trading platform's user account as included in the response sent to the respective game system from the identity management system.

The response sent to the respective game system by said identity management system may further include encrypted data identifying the respective trading platform's user account. Moreover, the trading system may be configured to decrypt the encrypted data received from the respective game system.

The identity management system may further receive the access token from the respective game system in a subsequent request for user information, and provide the user information to the respective game system if the identity management system was able to verify the received access token.

The computer system may further comprise an API (Application Programming Interface) gateway that can be accessed by the first and second game systems to send the user data relating to the respective game system's user account to the identity management system, and send the requests to the trading system.

The computer system may further comprise a plurality of geographically distributed server nodes which may each implement at least a part of one or more of the account system, the identity management system, and the trading system for use with game systems that are physically located close to the respective server node.

The computer system may further comprise a plurality of servers that each implement at least a part of one or more of the account system, the identity management system, and the trading system, and one or more distributor nodes which direct any access or request from a game system to an individual one of multiple server clusters within the plurality of servers. The one or more distributor nodes may be configured to persist sessions to the same server cluster by directing any subsequent access or request from the same game system to the same server cluster.

The computer system may further comprise a profile store that stores user profile data such as avatars or levels, per user and game. The computer system may further comprise an item store that stores items including the tradable item in relation to one or more user profile data stored in the profile store. The computer system may further comprise an API gateway which is capable of synchronizing one or more of the user profile data stored in the profile store and the items stored in the item store, with respective ones of the game systems.

The tradable item may be an in-game virtual object or an in-game virtual monetary asset, and the trading system may further perform a transfer of real-world monetary assets in conjunction with the intra-system account transfer of the item from the trading platform's first user account to the trading platform's second user account.

The first game system's user account may be an account of a user who is the same as or different from the user who has the second game system's user account.

The identity management system may be in trust relationship to the first and second game systems and may establish a secure connection between the computer system and the first and second game systems for use by the computer system as well as the first and second game systems.

In another embodiment, there is provided a method of operating a computer-implemented game system to interact with a computer-implemented trading platform. The game system has a user account, and the trading system has a first and a second user account. The method comprises initiating, by one or more processors of the game system, one or more account transfers of a tradable item. The one or more account transfers are one or more of an inter-system account transfer of the tradable item from the user account of the game system to the first user account of the trading platform, an intra-system account transfer of the tradable item from the first user account of the trading platform to the second user account of the trading platform, and an inter-system account transfer of the tradable item from the second user account of the trading platform to the user account of the game system. The initiating one or more account transfers of the tradable item comprises sending user data relating to the user account of the game system to the trading platform to access identity management services provided by the trading platform. The initiating of the one or more account transfers of the tradable item further comprises receiving a response from the trading platform including an access token assigned to one of the first and second user accounts of the trading platform, wherein the one of the first and second user accounts of the trading platform relates to the user account of the game system. Moreover, the initiating of the one or more account transfers of the tradable item further comprises sending a request to the trading platform to access trading services provided by the trading platform, where the trading services include services to perform the one or more account transfers of the tradable item. The request comprises the access token assigned to the one of the first and second user accounts of the trading platform.

The response may further include encrypted data that identifies one of the first and second user accounts of the trading platform.

The method may further comprise sending a subsequent request to the trading platform to access the identity management services to obtain user information. The subsequent request may comprise the access token.

The method may further comprise accessing an API gateway of the trading platform to send the user data relating to the user account of the game system to the trading platform, and/or send the request to the trading platform to access trading services provided by the trading platform.

The method may further comprise accessing an API gateway of the trading platform to synchronize one or more of user profile data and tradable item data stored in the trading platform, with respective data of the game system.

The initiating one or more account transfers of the tradable item may further comprise determining one of a plurality of geographically distributed server nodes of the trading platform and addressing the determined server node for sending the user data and/or sending the request. The determined server node may be physically located close to the game system.

The tradable item may be an in-game virtual object or an in-game virtual monetary asset, and the method may further comprise initiating a transfer of real-world monetary assets in conjunction with the intra-system account transfer from the first user account of the trading platform to the second user account of the trading platform.

The game system may be in trust relationship to an identity management system of the trading platform to establish and/or maintain a secure connection between the game system and the trading platform.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
FIG. 1 illustrates the conventional relationship between users and games companies.
FIG. 2 illustrates the relationship between users and games companies when using a trading platform according to an embodiment.
FIG. 3 illustrates how the participants may interact when using the trading platform according to an embodiment.
FIG. 4 is a block diagram illustrating an embodiment of the trading platform and its components.
FIG. 5 illustrates a server architecture of the trading platform according to an embodiment.
FIG. 6 illustrates an identity management using the trading platform and game systems according to an embodiment.
FIG. 7 illustrates services within the trading platform, and how they may be used by a game system, according to an embodiment.
FIG. 8 is a flow chart illustrating a process of how a game system may interact with the trading platform to make use of the services, according to an embodiment.

### DETAILED DESCRIPTION OF THE INVENTION

The illustrative embodiments of the present invention will be described with reference to the figure drawings wherein like elements and structures are indicated by like reference numbers.

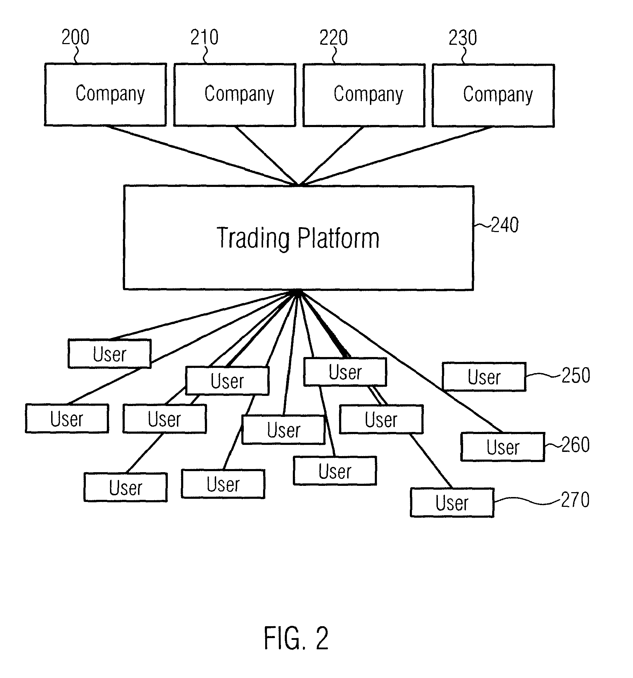

Referring to FIG. 2, an embodiment is depicted illustrating the relationship between games companies 200, 210, 220, 230 and user 250, 260, 270. As shown in the drawing, there is a trading platform 240 interacting with both the companies and the users. The trading platform 240 is a computer system which may be accessed by the companies and users and which provides automated services as will be described in more detail below. By operating the trading platform, it is no longer necessary for users to perform black market trading as the embodiment provides a regulated and standardized environment which is easy to implement for games companies.

An example scenario may for instance be described as follows. One of the users 250, 260, 270 plays one of the games of companies 200, 210, 220, 230 and achieves a certain game level or a certain in-game equipment such as a red Italian sports car. The user may then wish to sell this virtual item, and he/she logs on to the trading platform 240 where the virtual item is offered to other users. For this purpose, the virtual item is transferred from the user account of the game system where the user played the game, to the user's account at the trading platform. This transfer can be regarded as being an inter-system account transfer of the virtual item as the virtual item is transferred from one system (the game system) to another system (the trading platform). Thus, according to an embodiment, the virtual item has left the game system and is no longer playable.

At a later point in time, another user decides to buy this virtual item through the trading platform in order to play the game with the red sports car. This other user makes a real money transaction to the trading platform, and the virtual item is transferred from the first user's account at the trading platform to the second user's account at the trading platform. This transfer can be regarded as being an intra-system account transfer of the virtual item as the virtual item is transferred between user accounts of one and the same system, *i.e.,* the trading platform. Further, the first user receives a real money amount paid by the second user, with an optional deduction of service fees. Finally, the virtual item is transferred from the user account of the second user at the trading platform to the user account of this user at the respective game system, which is an inter-system account transfer of the virtual item.

Thus, the embodiments provide for a physical settlement of virtual items from games to a trading platform and for trading the virtual item at this platform, including the matching and settlement back to the game of the buying user. Thus, the trading platform can be regarded as a virtual items exchange with a specific user account technology. Further, as described below, embodiments exist which include an identity management technology to make any user access secure and user convenient.

In general, users may interact with the trading platform using a website of the trading platform or using the respective game system. A game system may be regarded as hardware or software used for playing a game provided by a respective company. Thus, in an embodiment, the user may access the trading platform directly from the gaming hardware or software, for instance by entering a specific menu item that is provided within the game.

While the example scenario described above discussed the transfer of a virtual item from a first user to a second user, it is noted that embodiments may also provide for such transfer between accounts of the same user. For instance, similar to the scenario described above, a user may wish to transfer a specific amount of virtual currencies from one game to another game of the same or different company. In this embodiment, the user would transfer the virtual item, i.e. the specific amount of virtual currency, to the trading platform, and would then transfer this item back to the same user's account at a different game.

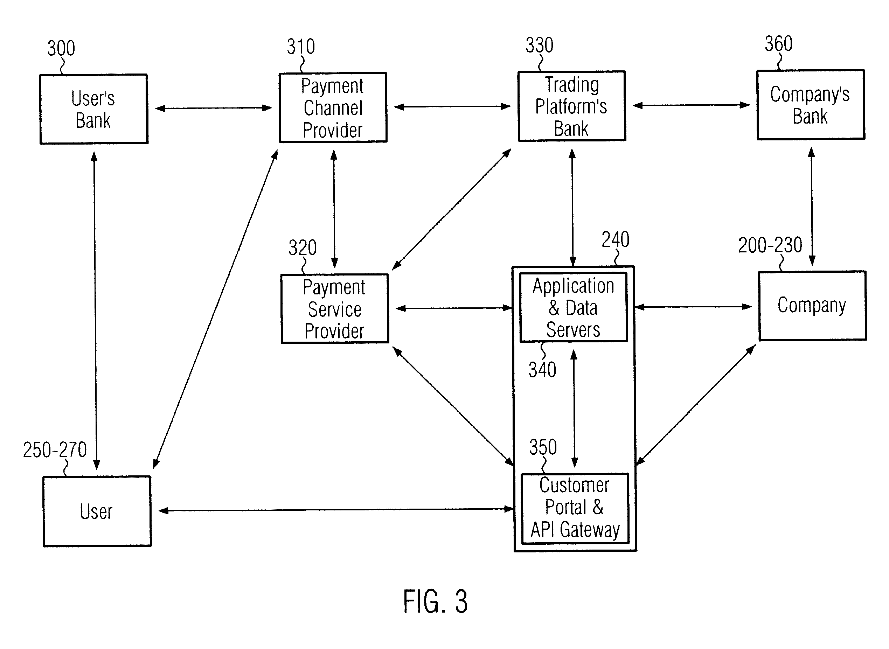

Referring now to FIG. 3, a relationship overview is provided that may apply to the example scenarios discussed above, and to other scenarios. A user 250, 260, 270 has a bank account at bank 300. Also the company 200, 210, 220, 230 has a bank account at the same or at a different bank 360. Further, the trading platform 240 has a bank account at bank 330 which may be different or the same as banks 300 and 360. The user 250, 260, 270 may interact with the trading platform 240, in particular with a component 350 that provides a customer portal and an API gateway. This component may also be accessed by the company 200, 210, 220, 230. Further, there may be involved a payment service provider 320 and a payment channel provider 310 for payment processing.

Let's assume a user 250, 260, 270 wishes to sell an item. Once the user 250, 260, 270 has accessed the trading platform 240, 350 through a website or a game system, and transferred the item to the same user's account at the trading platform, a payment is initiated. For this purpose, the trading platform may transmit payment data to the payment service provider. This payment data may include an amount to be paid, and may identify a payment channel such as credit card or bank account. The payment service provider 320 may then ask the user 250, 260, 270 for the necessary data such as credit card credentials, and the payment service provider 320 may then file a payment request to the payment channel provider 310. Subsequent to this, a payment netting is performed between the payment channel provider 310 and the respective banks 300, 330.

Let's then assume that the same or a different user 250, 260, 270 intends to buy this item. The trading platform may transmit payment data to the payment service provider 320 which processes the payment request by interacting with the user 250, 260, 270 and the payment channel provider 310 in a way similar to the example described above, but depending on the payment channel which may be different. Again, a subsequent payment netting is performed by the payment channel provider 310 and the involved banks 300, 330. Finally, the sold virtual item is transferred within the trading platform 240 between the respective user accounts, and a payment netting is performed between banks 330 and 360.

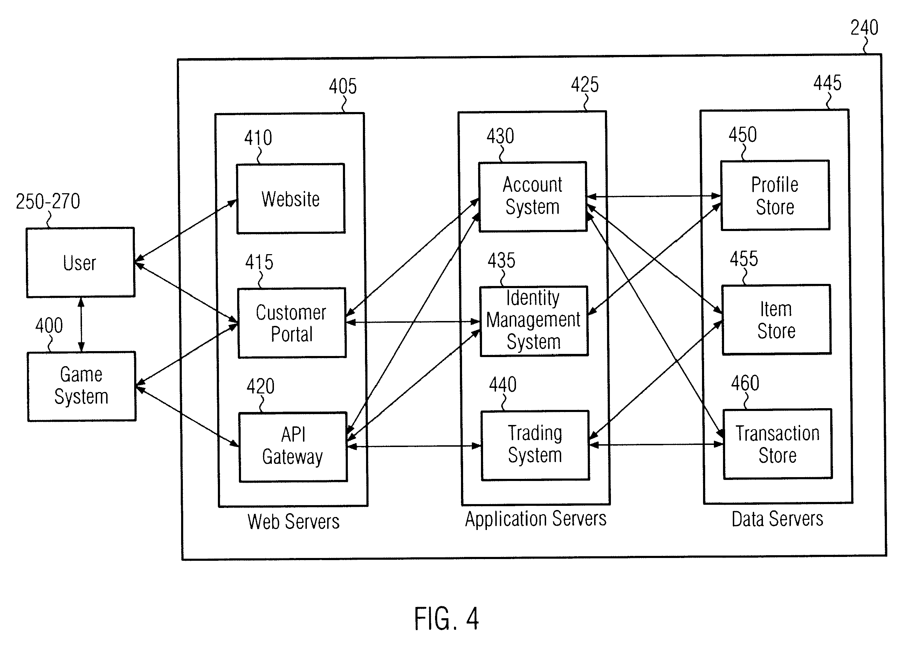

As discussed above, the trading platform 240 may include a component 350 for providing a customer portal and an API gateway. Further, there may be application and data servers 340. This will be described in more detail with reference to FIG. 4.

In the embodiment of FIG. 4, the trading platform 240 may include web servers 405, application servers 425 and data servers 445.

The web servers 405 are the main point of contact for the users 250, 260, 270 which can contact the web servers either directly or through a game system 400.

In an embodiment, the web servers 405 include a server 410 to provide a web site of the trading platform 240. This web site may include publicly available information for existing users 250, 260, 270 and companies 200, 210, 220, 230 or new users or companies.

A customer portal 415 may be present to provide a central web interface to users 250, 260, 270 and companies 200, 210, 220, 230 to enable an automated customer self service as well as social interactions such as chat or discussion. The customer portal 415 may offer a secure interface to application servers and data servers of the trading platform 240.

In addition, the web servers 405 may include a web service platform such as a gateway 420 to provide users 250, 260, 270, game systems 400 and companies 200, 210, 220, 230 with a secure access to the trading platform 240. The gateway 420 may be an API gateway that may support push/pull functionality and that may be used to synchronize gaming inventories between game systems 400 and the trading platform 240.

The application servers 425 may include an account system 430 that aggregates and combines user profile data such as avatars or gaming levels, and item inventories per user and game with transactions executed by the trading platform 240. The account system 430 may also be the component responsible for the virtual and/or real world payment and the transaction settlement.

An identity management system 435 may be provided to authenticate, authorize and/or secure all access to the trading platform's functionality. The services provided by the identity management system 435 enable cross domain user provisioning by managing a user's identity in a user convenient way that does not require users to perform multiple authentication at the trading platform 240 and game systems 400. This will be described in more detail below.

The trading system 440 is another application server, and it is provided within the trading platform 240 to interact with the identity management system 435 and the account system 430 to enable an automated item listing and trading access. In particular, the trading system 440 may support inter-system account transfers and intra-system account transfers such as those described above. The trading system 440 may be accessed through the API gateway 420, thereby offering a trading API via a web service platform.

The data servers 445 may include a profile store 450 that stores user profile data such as avatars or levels per user and game, an item store 455 that stores virtual items in relation to a profile and/or items listed on the trading system 440, and a transaction store 460 that is a persistence layer of the transactions executed by the trading system 440 and the payment channels.

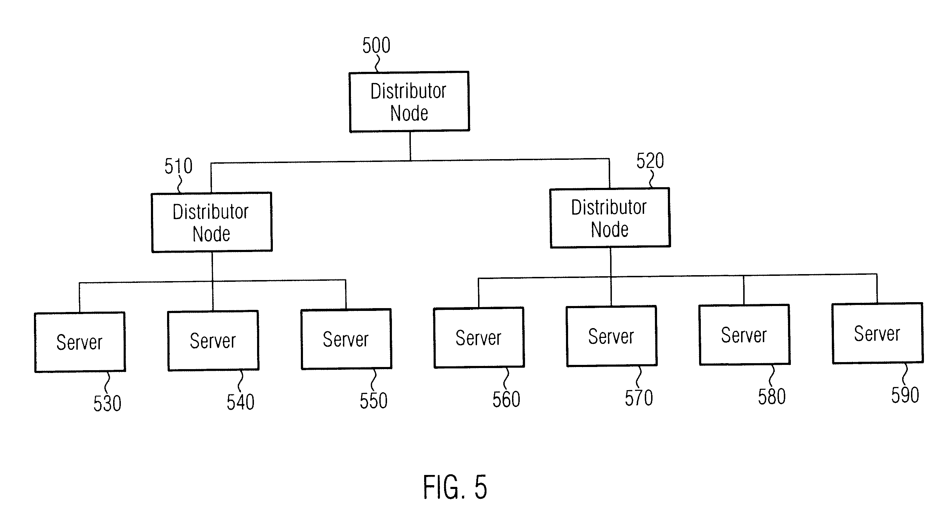

Some or all of the servers 405, 425, 445 discussed above may be grouped and clustered as shown in FIG. 5. In this example, there is a cluster of servers 530, 540, 550, 560, 570, 580, 590 that are divided into a first subcluster 530, 540, 550 and a second subcluster 560, 570, 580, 590. In this embodiment, each server within a subcluster shares data only with other members of the same subcluster. While the example of FIG. 5 shows two subclusters each having three or four servers, it is noted that in other embodiments, the number of subclusters and servers per subcluster may be different.

As can be seen from FIG. 5, the architecture may further include distributor nodes 500, 510, 520 to direct any access or request from a user, game system or company to one of the server clusters or subclusters. This distribution may be done such that the servers in the subclusters receive substantially the same or a similar number of access requests. Additionally, or alternatively, the distribution may take into account the physical location of the servers and users or game systems or companies. In this embodiment, the servers 530, 540, 550, 560, 570, 580, 590 or subclusters are geographically distributed at different locations, and the distributor nodes 500, 510, 520 may be configured to direct any access or request to those servers or (sub)clusters which are physically located close to the respective game system.

In an embodiment, the distributor nodes 500, 510, 520 are arranged to persist the user sessions to the same cluster or subcluster so that any subsequent access or request from the same game system is directed to the same (sub)cluster. This avoids an intensive session management at runtime and may therefore provide for a better overall cluster throughput.

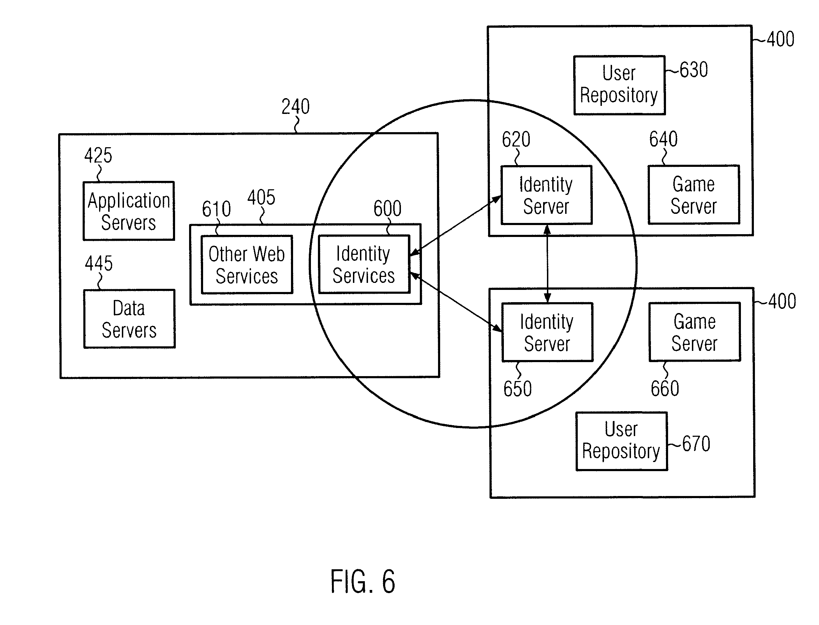

Turning now to FIG. 6 a system architecture is depicted to illustrate the identity management according to an embodiment. The figure shows the trading platform 240 in its relationship to multiple game systems 400. In the drawing, the number of game systems 400 is chosen to be two but this is to be understood as being for illustrative reasons only. That is, the number of game systems 400 may be an arbitrary number.

As apparent from the figure, the web servers 405 may provide identity services 600 and other web services 610. In an embodiment, the identity services 600 are provided by means of API gateway 420 when interacting with the identity management system 435.

The game systems 400 may each include an identity server 620, 650. The game systems 400 may further include a user repository 630, 670 and a game server 640, 660. Each game system 400 may be a computer-implemented game system that has at least one processor to run the identity servers 620, 650 and the game server 640, 660.

As apparent from FIG. 6, the identity servers 620, 650 of the game systems 400 may communicate to the identity services 600 of the trading platform 240. In an embodiment, any identity server 620, 650 of any game system 400 may also interact with any or all of the identity servers 620, 650 of any other game system 400. It is however noted that this interaction or communication between identity servers 620, 650 of game systems 400 is optional.

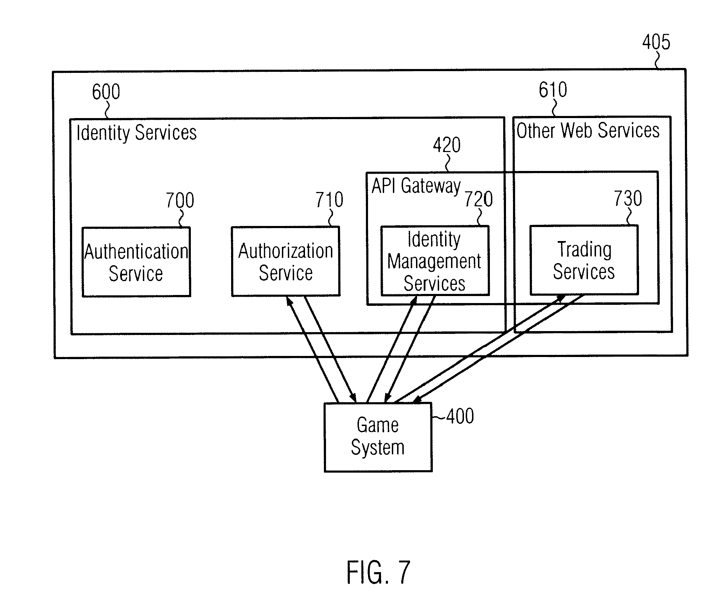

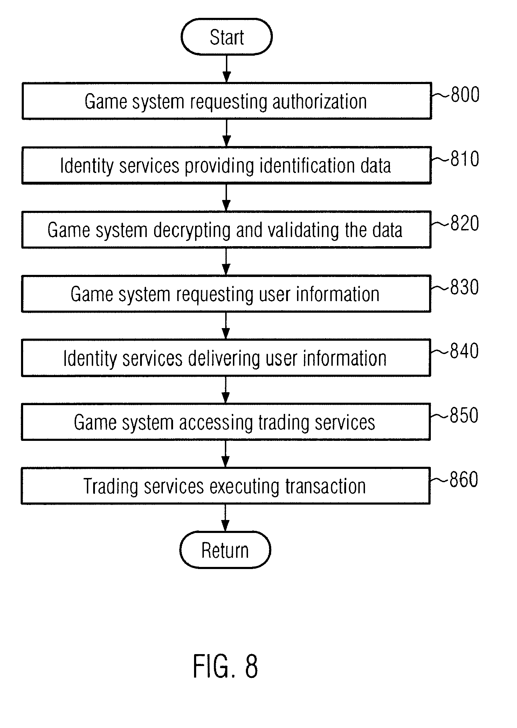

As indicated by the circle in FIG. 6, the identity servers 620, 650 of the game systems 400 are in trust relationship to the identity services 600. That is, the links between the identity servers 620, 650 and the identity services 600 are secure and trusted connections which allow the identity services 600 of the trading platform 240 to serve as connection provider to the game systems 400, *i.e.,* the identity servers 620, 650 of the game systems 400 may use this connection as a relying party. This will be described below with reference to FIGs. 7 and 8, and it is beneficial to users of game systems 400 and the trading platform 240 since users which have been authorized by one of the systems do not need to re-authorize at any other system that is within the trust relationship.

Reference is now made to FIGs. 7 and 8 to describe an example scenario of how the trust relationship between the identity services 600 and the game systems 400 may be used, for instance, when a user wants to sell or buy a virtual item from within a game.

In step 800, the game system 400 sends an authorization request to the identity services 600 of the trading platform 240 to request that the user be authorized. This authorization request may include user data relating to the game system's user account. The game system 400 that sends this authorization request may be the game system of the selling user and/or the game system of the buying user. Thus, the user data relates to the selling user and/or the buying user.

The game system 400 may send the authorization request to an authorization service 710 of the trading platform 240. The identity services 600, in particular the authorization services 710, then identify the trading platform's user account as relating to the user data received from said game system, and grant an access token and encrypted identification data to the game system 400. The access token may be specific to the respective user, and may therefore be regarded as being assigned to the respective trading platform's user account. This assignment may be a static one when the access token is permanently stored within the trading platform and is merely read in response to the authorization request, or it may be a temporary token that is generated in response to the authorization request and which is then valid for a certain time. The access token and identification data are then sent to the game system 400 in step 810.

The game system 400 decrypts and validates the identification data in step 820 and uses the access token to retrieve more user information by sending a request to the API gateway 420 to access identity management services 720 of the identity services 600. This may be performed in step 830.

In step 840, the identity management services 720 respond by delivering the requested user information to the game system 400.

In step 850, the game system 400 may again use the access token to access trading services 730 through the API gateway 420. For instance, the game system 400 which may be the game system of the selling user and/or that of the buying user, may send a request that includes the respective access token as included in the response sent to the respective game system from said identity management system. If the user is the selling user, then the request may be a request for an inter-system account transfer of a tradable item from the game system's user account to the trading platform's user account. If the user is the buying user, then the request may be a request for an intra-system account transfer of an item from the trading platform's user account of the selling user to the trading platform's user account of the buying user and a subsequent inter-system account transfer of this item from the trading platform's user account of the buying user to the game system's user account of the buying user. The trading services 730 may then execute the requested transaction(s) in step 860.

Thus, an improved mechanism is provided for allowing users or game systems to interact with a trading platform. Users are not required to perform multiple authorizations and may nevertheless use the trading platform to sell or buy virtual items of game systems. On the other hand, game developers need not program this functionality separately and individually in each gaming software but may instead simply enter into a trust relationship with the trading platform, and make use of the trading platform's API or other programming interface. Thus, the embodiments bring about significant advantages to both users of the game systems, and developers.

While the invention has been described with respect to the physical embodiments constructed in accordance herewith, it will be apparent to those skilled in the art that various modification, variation and improvements of the present invention may be made in the light of the above teachings and within the purview of the appended claims with out departing from the spirit and intended scope of the invention. Accordingly, it is to be understood that the invention is not limited by the specific illustrative embodiments, but only by the scope of the appended claims.

## Claims

1. A computer system for providing a trading platform to users of one or more game systems, the computer system arranged for being coupled to a first game system and a second game system each having a user account, said first game system being the same as or different from said second game system, the first game system's user account being different from the second game system's user account, the computer system comprising:
an account system holding a first user account and a second user account of said trading platform;
an identity management system configured to receive from said first game system user data relating to the first game system's user account, and from said second game system user data relating to the second game system's user account, said identity management system being further configured to identify the trading platform's first user account as relating to the user data received from said first game system, and the trading platform's second user account as relating to the user data received from said second game system, said identity management system being further configured to send a response to the respective game system including an access token assigned to the respective trading platform's user account; and
a trading system configured to perform, in response to a request from said first game system, an inter-system account transfer of a tradable item from the first game system's user account to the trading platform's first user account, and in response to a request from said second game system, an intra-system account transfer of said item from the trading platform's first user account to the trading platform's second user account and an inter-system account transfer of said item from the trading platform's second user account to the second game system's user account, said requests comprising the respective access token assigned to the respective trading platform's user account as included in the response sent to the respective game system from said identity management system.

2. The computer system of claim 1, wherein the response sent to the respective game system by said identity management system further includes encrypted data identifying the respective trading platform's user account, and wherein said trading system is configured to decrypt the encrypted data received from the respective game system.

3. The computer system of claim 1 or 2, wherein said identity management system is further configured to receive the access token from the respective game system in a subsequent request for user information, and provide said user information to the respective game system if said identity management system was able to verify the received access token.

4. The computer system of one of claims 1 to 3, further comprising an API gateway accessible by said first and second game systems to send said user data relating to the respective game system's user account to said identity management system, and send said requests to said trading system.

5. The computer system of one of claims 1 to 4, further comprising a plurality of geographically distributed server nodes each implementing at least a part of one or more of said account system, said identity management system, and said trading system for use with game systems physically located close to the respective server node.

6. The computer system of one of claims 1 to 5, further comprising a plurality of servers each implementing at least a part of one or more of said account system, said identity management system, and said trading system, and one or more distributor nodes configured to direct any access or request from a game system to an individual one of multiple server clusters within said plurality of servers, wherein said one or more distributor nodes are configured to persist sessions to the same server cluster by directing any subsequent access or request from the same game system to the same server cluster.

7. The computer system of one of claims 1 to 6, further comprising:
a profile store storing user profile data such as avatars or levels, per user and game;
an item store storing items including said tradable item in relation to one or more user profile data stored in said profile store; and
an API gateway capable of synchronizing one or more of the user profile data stored in said profile store and the items stored in said item store, with respective ones of the game systems.

8. The computer system of one of claims 1 to 7, wherein the tradable item is an in-game virtual object or an in-game virtual monetary asset, and the trading system is further configured to perform a transfer of real-world monetary assets in conjunction with said intra-system account transfer of said item from the trading platform's first user account to the trading platform's second user account.

9. The computer system of one of claims 1 to 8, wherein the first game system's user account is an account of a user being the same as or different from the user having the second game system's user account.

10. The computer system of one of claims 1 to 9, wherein said identity management system is in trust relationship to said first and second game systems and is configured to establish a secure connection between said computer system and said first and second game systems for use by said computer system as well as said first and second game systems.

11. A method of operating a computer-implemented game system to interact with a computer-implemented trading platform, the game system having a user account, the trading system having a first and a second user account, the method comprising:
initiating, by one or more processors of said game system, one or more account transfers of a tradable item, said one or more account transfers being one or more of:
an inter-system account transfer of the tradable item from the user account of the game system to the first user account of the trading platform;
an intra-system account transfer of the tradable item from the first user account of the trading platform to the second user account of the trading platform; and
an inter-system account transfer of the tradable item from the second user account of the trading platform to the user account of the game system,
wherein said initiating one or more account transfers of the tradable item comprises:
sending user data relating to the user account of the game system to the trading platform to access identity management services provided by the trading platform;
receiving a response from the trading platform including an access token assigned to one of the first and second user accounts of the trading platform, said one of the first and second user accounts of the trading platform relating to the user account of the game system; and
sending a request to the trading platform to access trading services provided by the trading platform, said trading services including services to perform said one or more account transfers of the tradable item, said request comprising said access token assigned to the one of the first and second user accounts of the trading platform.

12. The method of claim 11, further comprising sending a subsequent request to the trading platform to access the identity management services to obtain user information, said subsequent request comprising the access token.

13. The method of claim 11 or 12, further comprising accessing an API gateway of the trading platform to send said user data relating to the user account of the game system to the trading platform, and/or send said request to the trading platform to access trading services provided by the trading platform.

14. The method of one of claims 11 to 13, further comprising accessing an API gateway of the trading platform to synchronize one or more of user profile data and tradable item data stored in the trading platform, with respective data of the game system.

15. The method of one of claims 11 to 14, wherein the tradable item is an in-game virtual object or an in-game virtual monetary asset, and the method further comprises initiating a transfer of real-world monetary assets in conjunction with said intra-system account transfer from the first user account of the trading platform to the second user account of the trading platform.
